# EUROPÄISCHE PATENTANMELDUNG

(11) **EP 2 113 525 A1**
(43) Veröffentlichungstag der Anmeldung: **04.11.2009**
(21) Anmeldenummer: 08155487.5
(22) Anmeldetag: 30.04.2008
(51) Int. Cl.: C08G 59/68, C08G 18/80, C08G 18/38

(54) **Aktivator für Epoxidharzzusammensetzungen**

(71) Anmelder: Sika Technology AG, 6340 Baar (CH)
(72) Erfinder: Frick, Karsten, 5453 Remetschwil (CH); Gerber, Ulrich, 8142 Uitikon-Waldegg (CH); Finter, Jürgen, 8037 Zürich (CH); Kramer, Andreas, 8006 Zürich (CH)
(74) Vertreter: Sika Patent Attorneys

(57) **Zusammenfassung**

Die vorliegende Erfindung betrifft Aktivatoren für hitzehärtende Epoxidharzzusammensetzungen der Formel (I), bzw. Umsetzungsprodukte der Formel (Ia) mit einem Isocyanat oder Epoxid, sowie deren Verwendung in hitzehärtenden Epoxidharzzusammensetzungen. Diese Aktivatoren zeichnen sich durch eine gute Aktivierungswirkung sowie gute Lagerstabilität aus.

## Beschreibung

### Technisches Gebiet

Die vorliegende Erfindung betrifft das Gebiet der hitzehärtenden Epoxidharz-Rohbauklebstoffe.

### Stand der Technik

Hitzehärtende Epoxidharzzusammensetzungen sind seit langem bekannt. Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Damit eine schnelle Härtung erfolgen kann, werden neben hitzeaktivierbaren Härtern für Epoxidharze üblicherweise Beschleuniger oder Aktivatoren verwendet. Nachteilig ist jedoch, dass bei den meisten Aktivatoren, bzw. Beschleunigern, die mechanischen Eigenschaften des ausgehärteten Epoxidharzes stark verschlechtert werden. Neben Harnstoffen sind auch gewisse Imidazoline als Aktivatoren bzw. Beschleuniger bekannt. So beschreibt EP 0 501 074 A1 1-Isopropyl-2-Phenyl-Imidazolin und US 4,246,394 offenbart verschiedene Imidazoline für den Einsatz in hitzehärtende Epoxidharzzusammensetzungen. Schliesslich beschreibt US 4,997,951 Imidazoline, welche sich aus Methylsalicylat herstellen lassen. Diese Imidazoline zeigen jedoch gewisse Schwächen, insbesondere im Aktivierungsverhalten.

### Darstellung der Erfindung

Aufgabe der vorliegenden Erfindung ist es daher, neue Aktivatoren für hitzehärtende Epoxidharzzusammensetzungen zur Verfügung zu stellen, welche eine gute Wirksamkeit und trotzdem eine hohe Lagerstabilität aufweisen.

Es hat sich überraschenderweise gezeigt, dass Aktivatoren gemäss Anspruch 1 diese Aufgabe lösen.

Die Aktivatoren weisen exzellente Aktivierung, bzw. Beschleunigung, der Epoxidharzaushärtung bereits bei relativ tiefen Temperaturen auf. Daneben weisen sie jedoch auch exzellente Lagerstabilität auf, so dass sie ohne Probleme Epoxidharzen zugegeben werden können und über längere Zeit bei Temperaturen unter 50°C gelagert werden können. Es hat sich weiterhin gezeigt, dass durch diese Aktivatoren die mechanischen Eigenschaften der ausgehärteten Epoxidharzzusammensetzungen nicht oder nur sehr wenig verschlechtert werden.

Weiterhin lassen sich somit hitzehärtende Epoxidharzzusammensetzungen gemäss Anspruch 8 erstellen.

Weitere Aspekte der Erfindung betreffen ein Verfahren zum Verkleben gemäss Anspruch 15, eine Verwendung gemäss Anspruch 16 sowie einen verklebten Artikel gemäss Anspruch 17.

Besonders bevorzugte Ausführungsformen sind Gegenstand der Unteransprüche.

### Wege zur Ausführung der Erfindung

In einem ersten Aspekt betrifft die vorliegende Erfindung einen Aktivator C für Epoxidharzzusammensetzungen. Dieser Aktivator C weist die Formel (I) auf oder ist ein Umsetzungsprodukt einer Verbindung der Formel (la) mit einem Isocyanat oder Epoxid. 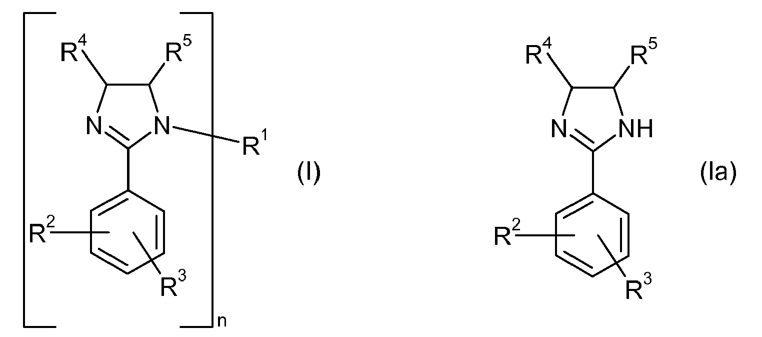 Hierbei steht n für 1 oder 2 oder 3 oder 4.
Weiterhin stehen R² und R³ entweder, unabhängig von einander, für H oder OH oder Halogen oder NH₂ oder NHR⁷ oder N(R⁷)₂ oder für eine Alkoxy-, Alkyl-, Aryl-, Alkylaryl- oder Alkylaryl-Gruppe, insbesondere mit 1 bis 10 C-Atomen, oder aber R² und R³ bilden zusammen einen gegebenenfalls substituierten, aliphatischen oder einen aromatischen Ring.
R⁴ und R⁵ stehen entweder, unabhängig von einander, für H oder OH oder Halogen oder für eine Alkoxy-, Alkyl-, Aryl-, Alkylaryl- oder Alkylaryl-Gruppe oder aber R⁵ und R⁵ bilden zusammen einen gegebenenfalls substituierten, aliphatischen oder einen aromatischen Ring. Bevorzugt weisen die Alkoxy-, Alkyl-, Aryl-, Alkylaryl- oder Alkylaryl-Gruppen zwischen 1 und 10 C-Atomen auf. Besonders bevorzugt stehen R⁴ und R⁵ unabhängig von einander für H oder eine C₁- bis C₃-Alkylgruppe.
Weiterhin steht R¹ entweder für einen n-wertigen, gegebenenfalls Heteroatom aufweisenden, aliphatischen, cycloaliphatischen oder aromatischen organischen Rest, oder aber R¹ steht für einen Rest der Formel (II).

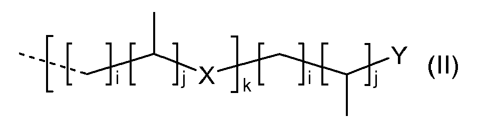

Hierbei steht i und j und k je für einen Wert von 0 bis 10, mit der Massgabe, dass die Summe von i und j mindestens 2 ist und X steht für O oder S oder NR⁷. Y steht für OR⁷ oder SR⁷ oder N(R⁷)(R^{7'}) oder für einen Substituenten der Formel (III).

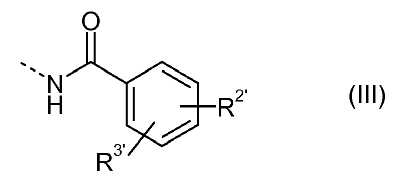

R^{2'} und R^{3'} wiederum stehen entweder, unabhängig von einander, für H oder OH oder Halogen oder NH₂ oder NHR⁷ oder N(R⁷)₂ oder für eine Alkoxy-, Alkyl-, Aryl-, Alkylaryl- oder Alkylaryl-Gruppe, oder aber R^{2'} und R^{3'} bilden zusammen einen gegebenenfalls substituierten, aliphatischen oder einen aromatischen Ring.
R⁷ und R^{7'} schliesslich stehen unabhängig von einander für H oder für eine Alkyl-, Cycloalkyl-, Aralkyl- oder Arylgruppe mit 1 bis 8 Kohlenstoffatomen.

Die gestrichelten Linien in den Formeln dieses Dokumentes stellen jeweils die Bindung zwischen dem jeweiligen Substituenten und dem dazugehörigen Molekülrest dar.

Es gilt hierbei die Massgabe, dass zumindest einer der Reste R², R³, R⁴ und R⁵ verschieden von H ist und dass, falls Reste R^{2'} und/oder R^{3'} vorhanden sind, zumindest drei der Reste R², R^{2'}, R³ und R^{3'} verschieden von H sind.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Es ist zu beachten, dass es für die Erfindung wesentlich ist, dass zumindest einer der Reste R², R³, R⁴ und R⁵ verschieden von H ist. Somit entsprechen insbesondere 1-Methyl-2-Phenyl-Imidazolin, 1-Isopropyl-2-Phenyl-Imidazolin oder 2-Phenyl-Imidazolin nicht der Formel (I) und stellen somit keine erfindungsgemässen Aktivatoren dar.

Insbesondere weist der Aktivator **C** die Formel(I-1) oder (I-2) auf. 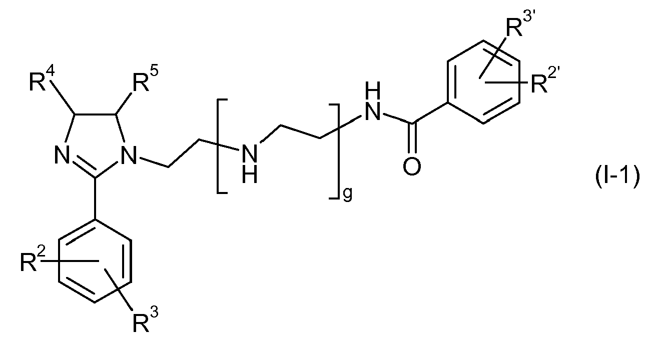 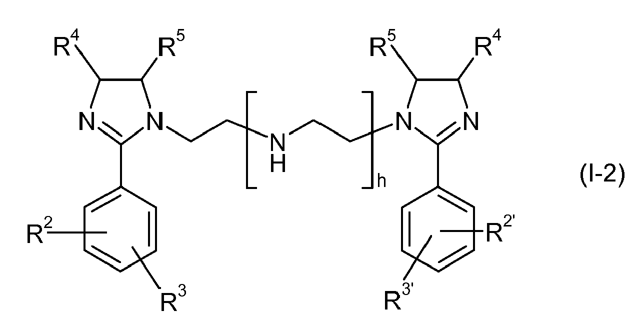 Hierbei steht g für 0 oder 1 oder 2 oder 3 und h steht für 0 oder 1 oder 2.
Die Reste R² und R^{2'} stehen insbesondere für OH und R³ und/oder R^{3'} stehen insbesondere für OH, Cl, CH₃ oder OCH₃. Bevorzugt stehen R² und R^{2'} je für OH und R³ und R^{3'} stehen je für Cl. Weiterhin bevorzugt stehen R² und R^{2'} je für OH und R³ und R^{3'} stehen je für CH₃. R² und R³, bzw. R² und R³, stehen bevorzugt m zueinander.

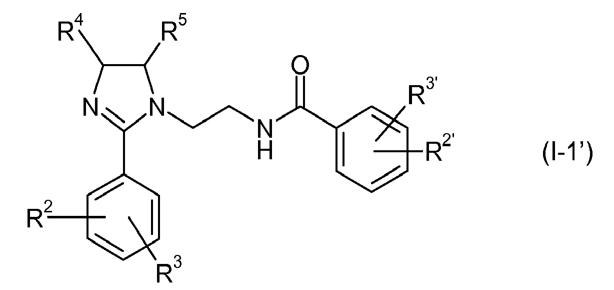

Wenn in der Formel des Aktivators **C** Reste R^{2'} und/oder R^{3'} vorhanden sind, wie dies bei den Formeln (I-1), (I-1) und (I-2) der Fall ist, ist zu beachten, dass es für die Erfindung einerseits wesentlich ist, dass zumindest einer der Reste R², R³, R⁴ und R⁵ verschieden von H ist, sowie andererseits, dass zumindest drei der Reste R², R^{2'}, R³ und R^{3'} verschieden von H sind.
Somit entsprechen insbesondere Verbindungen der zwei folgenden Formeln nicht der Formel (I) und stellen somit keine erfindungsgemässen Aktivatoren dar:

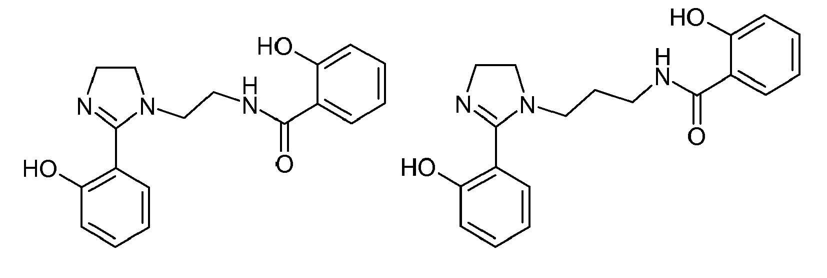

Ein Grossteil der Aktivatoren **C** der Formel (I) lassen sich aus einem Methoxysäureester der Formel (1-1 a) und einem Amin herstellen.

So lassen sich die Aktivatoren **C** der Formel (I-1) aus dem Methoxysäureester der Formel (I-1a) und/oder (I-1a') und einem Polyamin der Formel (I-1b) herstellen. Bevorzugt steht R² und/oder R^{2'} in o-Stellung zur Estergruppe.

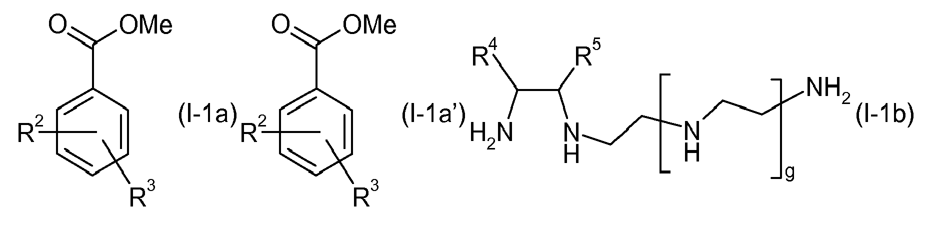

Die Aktivatoren **C** der Formel (I-2) lassen sich aus dem Methoxysäureester der Formel (I-1a) und einem Polyamin der Formel (I-2b) herstellen. Es wird hierbei ein Zwischenprodukt der Formel (I-2c) gebildet, welches durch Ringschluss unter Kondensation zum Aktivator der Formel (I-2) übergeführt werden kann.

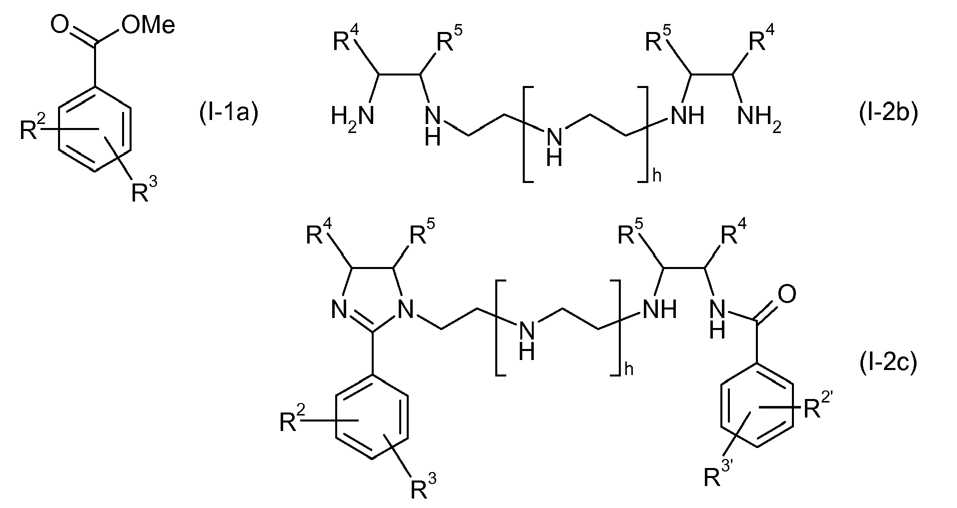

Diese Reaktionen werden typischerweise in einem molaren Verhältnis von (1-1a):(I-1b) bzw. (I-2b) von mindestens 2:1, insbesondere 3:1 bis 4:1 durchgeführt. Wird die Umsetzung in einem solchen molaren Verhältnis von weniger als 2:1 durchgeführt, entstehen Verbindungen der Formel (I-3a) oder (I-3b).

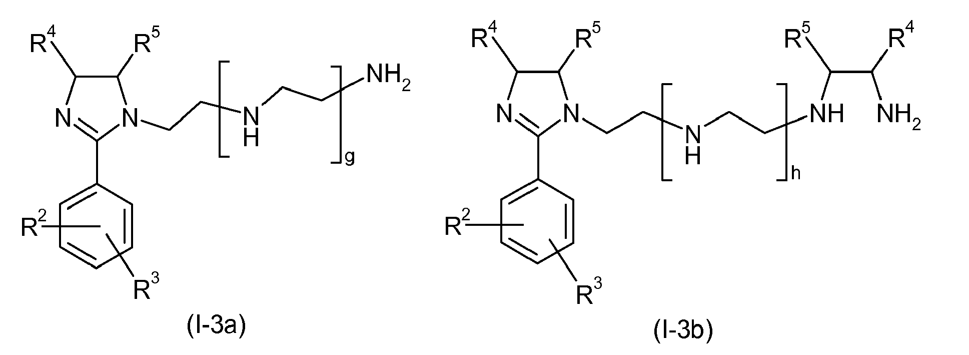

Derartige Verbindungen der Formel (I-3a) oder (I-3b) können mit einem Methoxysäureester der Formel (I-1a') zu Aktivatoren umgesetzt werden, in denen R² ≠ R^{2'} und/oder R³ ≠ R^{3'} sind.

Wird ein Methoxysäureester der Formel (I-1a) mit einem Amin der Formel (I-4a) umgesetzt entsteht ein Aktivator der Formel **C** (I-4).

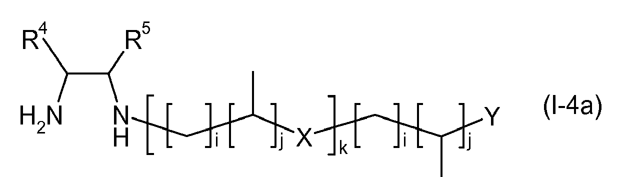

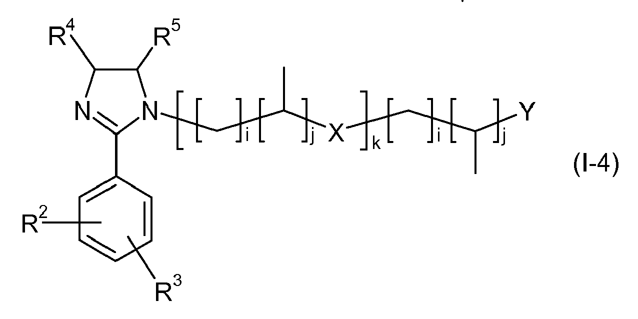

Wird ein Methoxysäureester der Formel (I-1a) mit einem Amin der Formel (I-5a), entsprechend einem Amin der Formel (I-2b) mit h=0, umgesetzt, entsteht je nach Stöchiometrie zwischen Methoxysäureester und Amin der Formel (I-5a) ein Aktivator **C** der Formel (I-5) oder (I-5') oder (I-5").

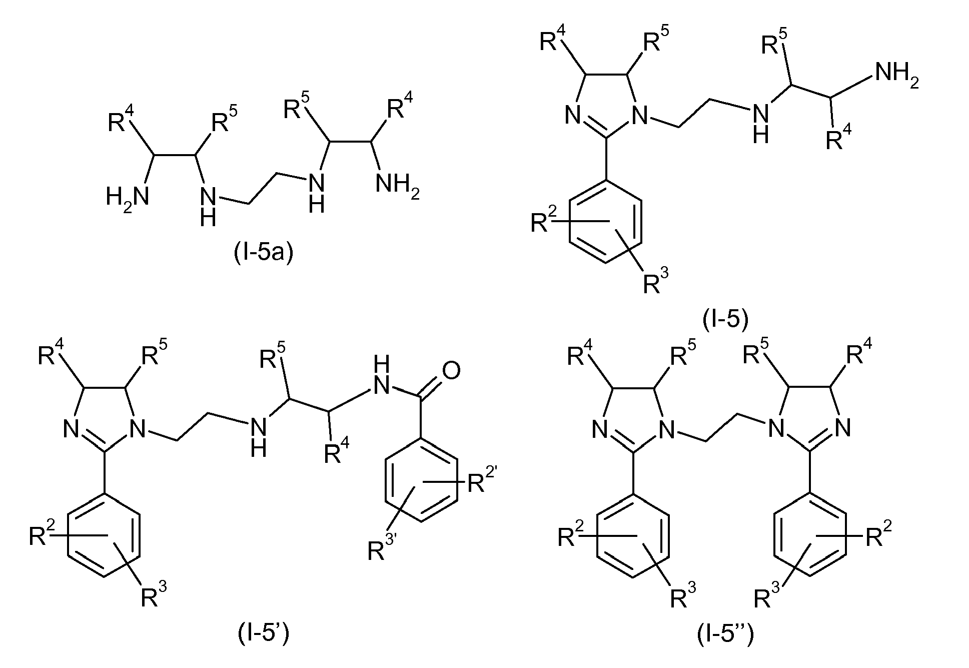

Weiterhin kann der Aktivator **C** ein Umsetzungsprodukt einer Verbindung der Formel (la) mit einem Isocyanat, insbesondere einem Monoisocyanat oder Diisocyanat, sein. Insbesondere weist der Aktivator **C** hierbei mindestens ein Strukturelement der Formel (Ia-1) auf.

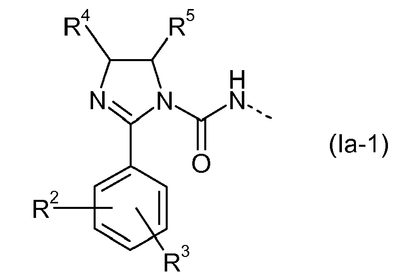

Als Isocyanat sind insbesondere Monoisocyanate oder Diisocyanate geeignet. Als Monoisocyanat sind insbesondere geeignet Phenylisocyanat, Tolylisocyanat oder Toluylsulfonylmonoisocyanat.
Als Diisocyanate sind geeignet aliphatische, cycloaliphatische, aromatische oder araliphatische Diisocyanate, insbesondere Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI) sowie deren Dimeren oder Trimeren.
Bevorzugte Diisocyanate sind HDI, IPDI, MDI oder TDI.

Bevorzugt wird eine Monoisocyanat oder Diisocyanat, welches ausgewählt ist aus der Gruppe bestehend aus Phenylisocyanat, Tolylisocyanat, Hexamethylendiisocyanat (HDI), Isophorondiisocyanat (IPDI), Methylendiphenyldiisocyanat (MDI) und Toluoldiisocyanat (TDI).

Die Umsetzung einer Verbindung der Formel (la) mit einem Isocyanat erfolgt in dem Polyurethan-Fachmann bekannten Art und Weise.

Weiterhin kann der Aktivator **C** ein Umsetzungsprodukt einer Verbindung der Formel (la) mit einem Epoxid, insbesondere einem Monoglycidylether oder Diglycidylether oder Triglycidylether, sein. Insbesondere weist der Aktivator **C** hierbei mindestens ein Strukturelement der Formel (la-2), insbesondere der Formel (la-2'), auf.

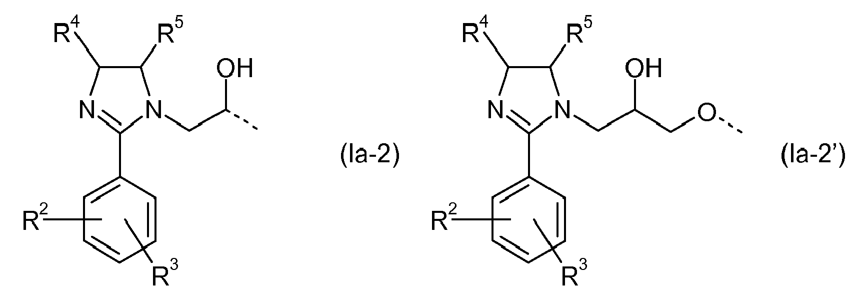

Als Epoxid sind insbesondere geeignet
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether;
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan;
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol;
- Epoxidierte Amine wie N, N-Diglycidylcyclohexylamin;
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester;
- Epoxidierte di- oder trifunktionelle, nieder- bis hochmolekulare Polyetherpolyole, insbesondere Polyethylenglycol-diglycidylether oder Polypropyleneglycol-d iglycidylether;
- Epoxidharze, wie sie als Epoxidharze **A** als Bestandteil für hitzehärtende Epoxidharzzusammensetzungen beschrieben werden, insbesondere Diglycidylether von Bisphenol A und/oder F.

Besonders bevorzugt sind Hexandioldiglycidylether, Kresylglycidylether, p-*tert*-Butylphenylglycidylether, Polypropylenglycoldiglycidylether und Polyethylenglycoldiglycidylether;

Die Umsetzung einer Verbindung der Formel (la) mit einem Epoxid erfolgt in dem Epoxy-Fachmann bekannten Art und Weise.

Wird im Falle von Polyepoxiden, d.h. insbesondere von Diglycidylether oder Triglycidylether, die Formel (la) unterstöchiometrisch eingesetzt, entsteht ein Aktivator **C**, welcher mindestens eine freie Epoxid-Gruppe aufweist-. Auf diese Art und Weise kann der Aktivator **C** in im Folgenden beschriebenen hitzehärtenden Epoxidharzzusammensetzungen seine Aktivierungsfunktion wahrnehmen, wird aber schliesslich in die Epoxidharzmatrix chemisch eingebunden , wodurch verhindert wird, dass der Aktivator **C** im Laufe der Zeit insbesondere aufgrund unter dem Einfluss von Umwelteinflüssen, wie Wärme, Wasser- oder Chemikalienbelastung, aus der ausgehärteten Zusammensetzung herausgelöst wird und in die mit der ausgehärteten Zusammensetzung in Kontakt stehenden Umwelt abgegeben werden kann.

Grundsätzlich sollte zwar der Aktivator **C** keine primären oder sekundären Amino-Gruppen aufweisen. Falls er jedoch trotzdem solche Gruppen aufweist, ist dies jedoch keineswegs kritisch, denn obwohl er zwar im Einsatz in einer im Folgenden beschrieben hitzehärtenden Epoxidharzzusammensetzung mit dem Epoxidharz reagieren wird, bildet sich bei dieser Reaktion lediglich ein allenfalls höhermolekulares Umsetzungsprodukt, welches ebenfalls als Aktivator fungiert. Auch ist davon auszugehen, dass sich in diesem Fall aufgrund der Konzentrationsverhältnisse von Epoxidharz zu Aktivator ein Umsetzungsprodukt bildet, welches neben der aktivierenden Imidazolin-Struktur auch noch frei Epoxidgruppen aufweist, wodurch ein derartiger Aktivator ebenfalls in die Epoxidharz-Matrix eingebunden werden, was die oben erwähnten Vorteilen zur Folge hat.

Es hat sich erstaunlicherweise gezeigt, dass die Aktivatoren **C** eine sehr wirksame Aktivierung der Härtung von Epoxidharzen durch Wärme zu Folge hat. Die verbesserte Aktivierung wirkt sich in der Aushärtung bei tieferer Temperatur aus. Dies ist im DSC durch eine Verschiebung des Reaktionspeaks, bzw. durch die Verschiebung des sogenannten Onset-Punktes, beim erstmaligen Aufheizen, einer einen Aktivator **C** enthaltenden Epoxidharzmischung, zu tieferen Temperaturen ersichtlich verglichen mit der entsprechenden Zusammensetzung ohne Aktivator **C**. Es lassen sich somit Aushärtungen bereits bei Temperaturen ab 150°C, zuweilen bereits ab 140°C, erreichen, wie sie durch die sogenannten low-bake Härtungsprozesse benötigt werden.
Obwohl die Aushärtung bei tieferen Temperaturen erfolgt, wird die Glasübergangstemperatur (Tg) der ausgehärteten Epoxidharzzusammensetzung nicht oder nur geringfügig verschlechtert.
Gleichzeitig führt diese vergrösserte Aktivität jedoch nicht dazu, dass die Lagerstabilität der Epoxidharzzusammensetzung negativ beeinflusst wird. So tritt während einer Lagerung bei Temperaturen von bis zu 40°C keine wesentliche Viskositätserhöhung oder gar Gelierung der Zusammensetzung auch über lange Lagerzeiten von typischerweise mehr als einem halben Jahr auf.

In einem weiteren Aspekt betrifft die vorliegende Erfindung eine hitzehärtende Epoxidharzzusammensetzung umfassend
a) mindestens ein Epoxidharz **A** mit durchschnittlich mehr als einer Epoxidgruppe pro Molekül;
b) mindestens einen Härter **B** für Epoxidharze, welcher durch erhöhte Temperatur aktiviert wird und
c) mindestens einen wie vorgängig im Detail beschriebenen Aktivator **C**.
   Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.
   Bevorzugte Epoxid-Festharze weisen die Formel (X) auf

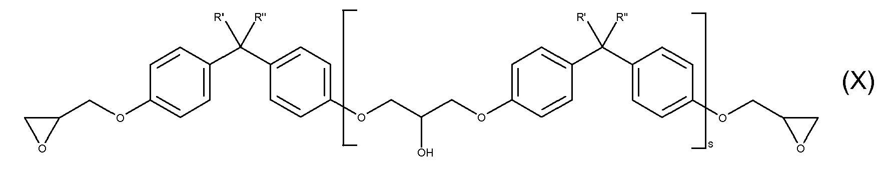

Hierbei stehen die Substituenten R' und R" unabhängig voneinander entweder für H oder CH₃. Weiterhin steht der Index s für einen Wert von > 1.5, insbesondere von 2 bis 12.
Derartige Epoxid-Festharze sind kommerziell erhältlich beispielsweise von Dow oder Huntsman oder Hexion.
Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

### Bevorzugte Epoxid-Flüssigharze weisen die Formel (XI) auf

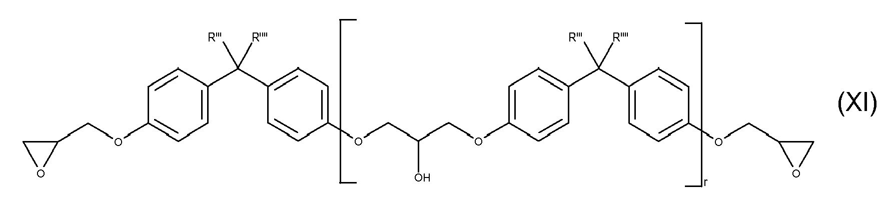

Hierbei stehen die Substituenten R''' und R'''' unabhängig voneinander entweder für H oder CH₃. Weiterhin steht der Index r für einen Wert von 0 bis 1. Bevorzugt steht r für einen Wert von kleiner als 0.2.
Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Novolake. Diese weisen insbesondere die folgende Formel auf:

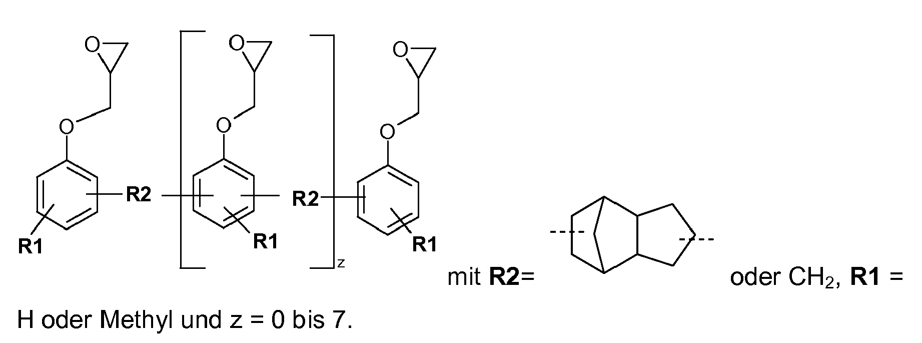

Insbesondere handelt es sich hierbei um Phenol- oder Kresol-Novolake (**R2** = CH₂).

Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron) oder N,N-Dimethylharnstoff. Weiterhin können Verbindungen der Klasse der Imidazole und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff sowie Imidazole, Imidazol-Salze und Amin-Komplexe.

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

Die hitzehärtende Epoxidharzzusammensetzung kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Es hat sich weiterhin gezeigt, dass es besonders vorteilhaft ist, wenn die hitzehärtende einkomponentige Epoxidharzzusammensetzung zusätzlich mindestens noch einen Zähigkeitsverbesserer **D** enthält. Die zusätzlichen Zähigkeitsverbesserer **D** können fest oder flüssig sein.

Insbesondere ist der Zähigkeitsverbesserer **D** ausgewählt ist aus der Gruppe bestehend aus blockierten Polyurethanpolymeren, Flüssigkautschuken, Epoxidharz-modifizierten Flüssigkautschuken und Core-Shell-Polymeren.

In einer Ausführungsform ist dieser Zähigkeitsverbesserer **D** ein Flüssigkautschuk **D1,** welcher ein Acrylonitil/Butadien-Copolymer ist, welches mit Carboxylgruppen oder (Meth)acrylatgruppen oder Epoxidgruppen terminiert ist, oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Zähigkeitsverbesserer **D** ein Polyacrylatflüssigkautschuk **D2**, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich. Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Zähigkeitsverbesserer **D** ein fester Zähigkeitsverbesserer, welcher ein organisches Ionen-getauschtes Schichtmineral **DE1** ist.

Das Ionen-getauschte Schichtmineral **DE1** kann entweder ein Kationen-getauschtes Schichtmineral **DE1c** oder ein Anionen-getauschtes Schichtmineral **DE1a** sein.

Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.

Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garamite® (Rockwood) erhältlich.

Das Anionen-getauschte Schichtmineral **DE1a** wird hierbei erhalten aus einem Schichtmineral **DE1",** bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1",** bei dem zumindest ein Teil der Carbonat-Anionen der Zwischenschichten durch organische Anionen ausgetauscht wurden.

Es ist durchaus auch möglich, dass die Zusammensetzung gleichzeitig ein Kationen-getauschtes Schichtmineral **DE1c** und ein Anionen-getauschtes Schichtmineral **DE1a** enthält.

In einer weiteren Ausführungsform ist der Zähigkeitsverbesserer **D** ein fester Zähigkeitsverbesserer, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Zähigkeitsverbesserer **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas oder Kane ACE MX-120 von Kaneka.

Weitere vergleichbare Beispiele für Core-Shell-Polymere werden unter dem Namen Albidur™ von Nanoresins AG, Deutschland, angeboten.

Ebenso geeignet sind nanoskalige Silikate in Epoxid-Matrix, wie sie unter dem Handelnamen Nonopox von Nanoresins AG, Deutschland, angeboten werden.

In einer weiteren Ausführungsform ist der Zähigkeitsverbesserer **D** ein Umsetzungsprodukt **DE4** eines carboxylierten festen Nitrilkautschuks mit überschüssigem Epoxidharz.

In einer weiteren Ausführungsform ist der Zähigkeitsverbesserer **D** ein blockiertes Polyurethanpolymer der Formel (IV).

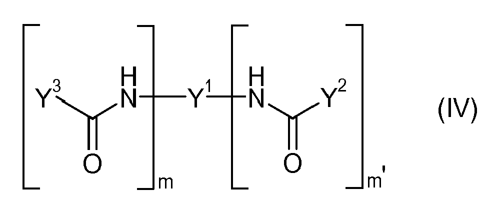

Hierbei stehen m und m' je für Werte zwischen 0 und 8, mit der Massgabe, dass m +m' für einen Wert von 1 bis 8 steht.

Weiterhin steht Y¹ für ein mit m+m' Isocyanatgruppen terminiertes lineares oder verzweigtes Polyurethanpolymer **PU1** nach dem Entfernen aller endständigen Isocyanatgruppen.

Y² steht unabhängig von einander für eine Blockierungsgruppe, welche sich bei einer Temperatur über 100°C abspaltet.

Y³ steht unabhängig von einander für eine Gruppe der Formel (IV').

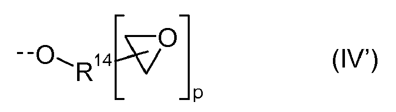

Hierbei steht R¹⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid-und Epoxidgruppen und p steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

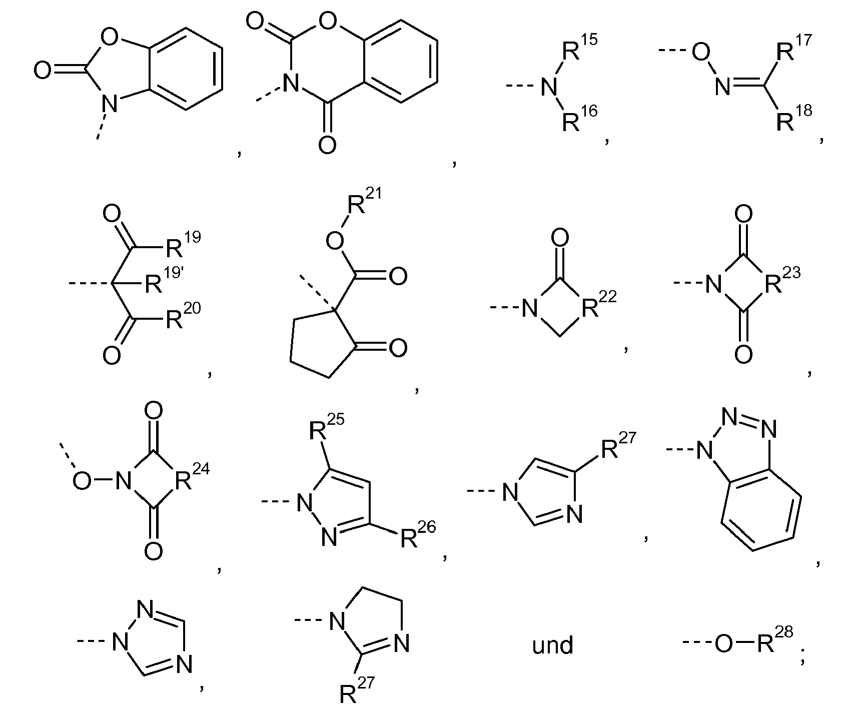

Hierbei stehen R¹⁵, R¹⁶, R¹⁷ und R¹⁸ je unabhängig voneinander für eine Alkyl- oder Cycloalkyl- oder Aralkyl- oder Arylalkyl-Gruppe oder aber R¹⁵ bildet zusammen mit R¹⁶, oder R¹⁷ zusammen mit R¹⁸, einen Teil eines 4- bis 7- gliedrigen Rings, welcher allenfalls substituiert ist.

Weiterhin steht R¹⁹, R^{19'} und R²⁰ je unabhängig voneinander für eine Alkyl- oder Aralkyl- oder Arylalkyl-Gruppe oder für eine Alkyloxy- oder Aryloxy-oder Aralkyloxy-Gruppe und R¹¹ für eine Alkylgruppe.

R²³ und R²⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R²⁵, R²⁶ und R²⁷ stehen je unabhängig voneinander für H oder für eine Alkylgruppe oder für eine Arylgruppe oder eine Aralkylgruppe.

Schliesslich steht R²⁸ für eine Aralkylgruppe oder für eine ein- oder mehrkernige substituierte oder unsubstituierte Aromatengruppe, welche gegebenenfalls aromatische Hydroxylgruppen aufweist.

Als R²⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-ÖI)), Nonylphenol, mit Styrol oder Dicyclopentadien umgesetzte Phenole, Bis-Phenol-A, Bis-Phenol-F und 2,2'-Diallyl-bisphenol-A.

Als R²⁸ sind andererseits insbesondere Hydroxybenzylalkohol und Benzylalkohol nach Entfernung einer Hydroxylgruppe zu betrachten.

Falls R¹⁵ R¹⁶, R¹⁷, R¹⁸, R¹⁹, R¹⁹, R²⁰, R²¹, R²⁵, R²⁶ oder R²⁷ für eine Alkylgruppe steht, ist diese insbesondere eine lineare oder verzweigte C₁-C₂₀-Alkylgruppe.

Falls R¹⁵ R¹⁶, R¹⁷, R¹⁸, R¹⁹, R¹⁹, R²⁰, R²⁵, R²⁶, R²⁷ oder R²⁸ für eine Aralkylgruppe steht, ist diese Gruppierung insbesondere eine über Methylen gebundene aromatische Gruppe, insbesondere eine Benzylgruppe.

Falls R¹⁵, R¹⁶, R¹⁷, R¹⁸, R¹⁹, R^{19'} oder R²⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste Y² sind Reste, welche ausgewählt sind aus der Gruppe bestehend aus

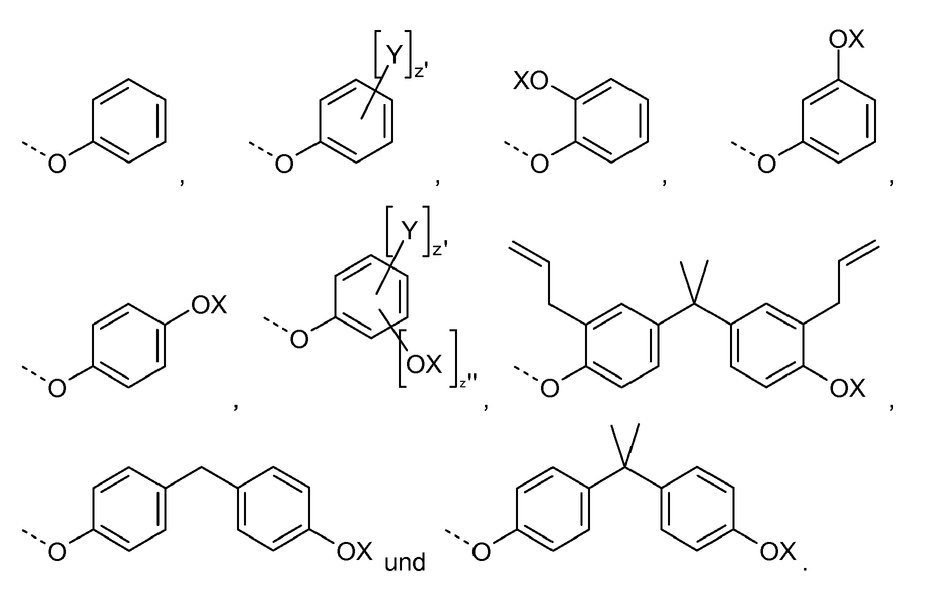

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.
Der Rest X steht für H oder für einen Alkyl-, Aryl-, Aralkylgruppe, insbesondere für H oder Methyl.
Die Indices z' und z" stehen für die Werte 0, 1, 2, 3, 4 oder 5, mit der Massgabe, dass die Summe z' + z" für einen Wert zwischen 1 und 5 steht.

Bevorzugt ist m verschieden von 0.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.
Die Isocyanat-reaktive Verbindung Y³H ist eine Monohydroxyl-Epoxidverbindung der Formel (IVa).

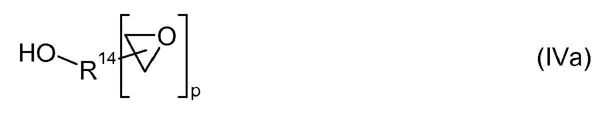

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

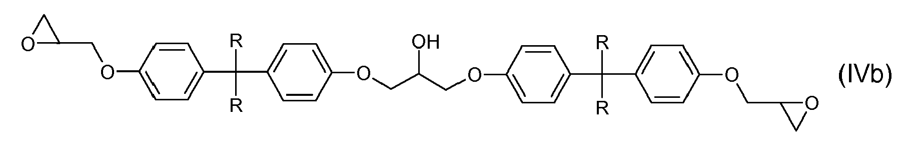

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R¹⁴ ist insbesondere bevorzugt ein dreiwertiger Rest der Formel 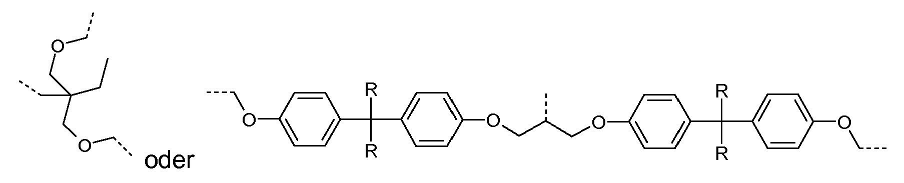 wobei R für Methyl oder H steht.
Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und /oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI) oder m-Tetramethylxylylen diisocyanat (TMXDI) sowie deren Dimere. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.

Besonders geeignet als in der Zusammensetzung gegebenenfalls vorhandenem Zähigkeitsverbesserer **D** sind Zähigkeitsverbesserer, welche ein Hydroxylgruppe(n) aufweisendes amphiphiles Blockcopolymer darstellen, wie sie unter dem Handelsnamen Fortegra™, insbeondere Fortegra™ 100, von Dow Chemical, vertrieben werden, bzw. deren Umsetzungsprodukte mit Polyisocyanaten und gegebenenfalls weiteren Isocyanatreaktiven Verbindungen.

Besonders geeignet als in der Zusammensetzung gegebenenfalls vorhandenem Zähigkeitsverbesserer **D** sind jene, wie sie in den folgenden Artikel bzw. Patentschriften, deren Inhalt hiermit durch Referenz miteingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11 bis Zeile 20; EP 1 728 825 A1, insbesondere Formel (I), besonders Seite 3, Zeile 21 bis Seite 4 bis Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die ambiphilen Blockcopolymere, besonders Seite 3339, 2. Spalte bis 3341 2.Spalte; WO 2004/055092 A1, insbesondere Formel (I), besonders Seite 7, Zeile 28 bis Seite 13 bis Zeile 15;. WO 2005/007720 A1, insbesondere Formel (I), besonders Seite 8, Zeile 1 bis Seite 17 bis Zeile 10; WO 2007/020266 A1, insbesondere Formel (I), besonders Seite 3, Zeile 1 bis Seite 11 bis Zeile 6, sowie DE-A-2 123 033, US 2008/0076886 A1, WO 2008/016889 und WO 2007/025007.

Es hat sich gezeigt, dass in der Zusammensetzung vorteilhaft mehrere Zähigkeitsverbesserer vorhanden sind, insbesondere auch mehrere Zähigkeitsverbesserer **D**.

Der Anteil an Zähigkeitsverbesserer **D** wird vorteilhaft in einer Menge von 1 - 35 Gew.-%, insbesondere 1 - 25 Gew.-%, bezogen auf das Gewicht der Zusammensetzung, eingesetzt.

In einer weiteren bevorzugten Ausführungsform enthält die Zusammensetzung zusätzlich mindestens einen Füllstoff **F**. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Ein weiteres Beispiel sind funktionalisierte Alumoxane wie z. B. in US 6,322,890 beschrieben.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner G. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft ein Verfahren zur Verklebung von hitzestabilen Substraten, welches die Schritte umfasst:
i) Applizieren einer hitzehärtenden Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates S2, insbesondere eines Metalls;
iii) Erhitzen der Zusammensetzung auf eine Temperatur von 100 - 220 °C, insbesondere von 140 - 200°C, bevorzugt zwischen 160 und 190°C.
   Das Substrat **S2** besteht hierbei aus dem gleichen oder einem unterschiedlichen Material wie das Substrat **S1**.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

### Beispiele

### Herstellung Aktivatoren

### Allgemeine Vorschrift für C-1 und C-3 (1 Imidazolin-Struktur aufweisend)

0.5 Mol des Amins wurden in Ethylenglycol aufgelöst. 0.33 Mol des jeweiligen Esters wurden anschliessend bei 130°C zugetropft. Nach der vollständigen Reaktion wurde nochmals 0.17 Mol des Esters zugegeben und während 4 Stunden bei 130°C gerührt. Anschliessend wurde während 2 Stunden bei 170°C weitergerührt und dann unter Vakuum das Lösungsmittel Ethylenglycol abgezogen, bis der Aktivator auskristallisierte. In gewissen Fällen war dies nicht der Fall. Hier wurde die Lösung auf zerhacktes Eis gegossen, wobei der Aktivator als Pulver ausfiel.

Allgemeine Vorschrift für ***C-2*** und ***C-Ref***.(2 Imidazolin-Strukturen aufweisend)

0.25 Mol Amin wurde in 0.75 Mol des Esters, welcher in Ethylenglycol gelöst war langsam zugetropft. Die Mischung wurde aufgeheizt und während 4 Stunden bei 130°C gerührt. Die Entfernung und Isolation erfolgte wie bereits oben für den Molumsatz 1:1 beschrieben. bei der Destillation wird auch der überschüssige Ester entfernt.

**Tabelle 1. Aktivatoren. Zahlen stellen Molverhältnis Amin bzw. Ester dar.**

| | ***C-1*** | ***C-2*** | ***C-3*** | **C-Ref.** |
|---|---|---|---|---|
| N-(2 Hydroxyethyl)ethylendiamin | 1 | | | |
| Diethylentriamin (DETA) | | 1 | | 1 |
| N-Isopropylaminoethylamin | | | 1 | |
| 2,4-Dihydroxybenzoesäureester | 1 | | | |
| Methyl-5-methylsal icylat | | 3 | | |
| Methyl-5-chlorsalicylat | | | 1 | |
| Methylsalicylat | | | | 3 |

Herstellung Epoxidharzzusammensetzungen.

Für die Herstellung der Epoxidharzzusammensetzungen ***1*** bis ***6*** und der Referenzbeispiele ***Ref.1*** und ***Ref.2*** wurden zu einer Mischung von Araldite® GY 250 (Huntsman) *("BADGE")* und Dyhard ® 100SF (Dicyandiamid) (Alzchem) *("dicy")* der jeweilige Aktivator zugerührt. In Tabelle 2 sind die Mengen in Gewichtsteilen angegeben.

Von den so gemischten Epoxidharz-Zusammensetzungen wurde ein auf einem Mettler DSC 822^{E} Gerät jeweils ein DSC aufgenommen (Aufheizung von 25°C auf 250°C, mit einer Heizgeschwindigkeit von 10 K/Minute). Aus der gemessenen Kurve wurden einerseits das Maximum des Reaktionspeaks als Tₘₐₓ sowie des aus der Kurve berechneten Onsets Tₒₙₛₑₜ bestimmt.

**Tabelle 2. Formulierungen der Zusammensetzungen und deren Eigenschaften. *n.b. = nicht bestimmt**

| | ***1*** | ***2*** | **3** | ***Ref.1 1*** | **4** | ***5*** | **6** | ***Ref.2*** |
|---|---|---|---|---|---|---|---|---|
| *BADGE* | 93.2 | 93.2 | 93.2 | 93.2 | 93.2 | 93.2 | 93.2 | 93.2 |
| *dicy* | 6.8 | 6.8 | 6.8 | 6.8 | 6.8 | 6.8 | 6.8 | 6.8 |
| ***C-1*** | 1.0 | | | | 2.0 | | | |
| ***C-2*** | | 1.0 | | | | 2.0 | | |
| ***C-3*** | | | 1.0 | | | | 2.0 | |
| ***C-Ref.*** | | | | 1.0 | | | | 2.0 |
| Tₒₙₛₑₜ[°C] | 153 | n.b.* | n.b.* | 168 | 149 | 138 | 135 | 167 |
| Tₘₐₓ[°C] | 174 | n.b.* | n.b.* | 178 | 166 | 150 | 150 | 177 |

## Patentansprüche

**1.** Aktivator **C** für Epoxidharzzusammensetzungen, welcher die Formel (I) aufweist oder ein Umsetzungsprodukt einer Verbindung der Formel (la) mit einem Isocyanat oder Epoxid ist 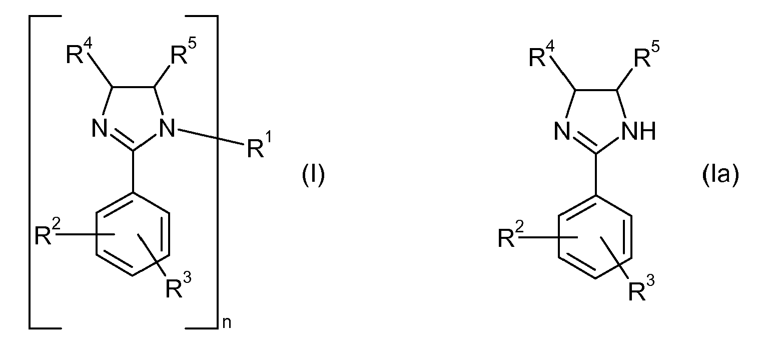 wobei n für 1 oder 2 oder 3 oder 4 steht;
R¹ für einen n-wertigen, gegebenenfalls Heteroatom aufweisenden, aliphatischen, cycloaliphatischen oder aromatischen organischen Rest steht, oder R¹ für einen Rest der Formel (II) steht 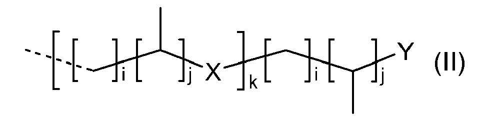 wobei hierbei
i und j und k je für einen Wert von 0 bis 10 steht, mit der
Massgabe, dass die Summe von i und j mindestens 2 ist,
X für O oder S oder NR⁷ steht,
Y für OR⁷ oder SR⁷ oder N(R⁷)(R^{7'}) oder für einen Substituenten der Formel (III) steht, 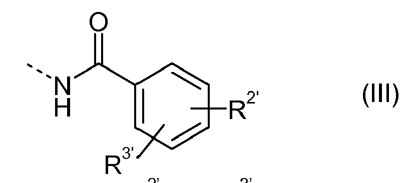 wobei R^{2'} und R^{3'} entweder, unabhängig von einander, für
H oder OH oder Halogen oder NH₂ oder NHR⁷ oder N(R⁷)₂ oder für eine Alkoxy-, Alkyl-, Aryl-, Alkylaryl- oder Alkylaryl-Gruppe stehen,
oder wobei R^{2'} und R³' zusammen einen gegebenenfalls substituierten, aliphatischen oder einen aromatischen Ring bilden;
R⁷ und R^{7'} unabhängig von einander für H oder für eine Alkyl-, Cycloalkyl-, Aralkyl- oder Arylgruppe mit 1 bis 8 Kohlenstoffatomen steht,
R² und R³ entweder, unabhängig von einander, für H oder OH oder Halogen oder NH₂ oder NHR⁷ oder N(R⁷)₂ oder für eine Alkoxy-, Alkyl-, Aryl-, Alkylaryl- oder Alkylaryl-Gruppe stehen,
oder R² und R³ zusammen einen gegebenenfalls substituierten, aliphatischen oder einen aromatischen Ring bilden;
R⁴ und R⁵ entweder, unabhängig von einander, für H oder OH oder Halogen oder für eine Alkoxy-, Alkyl-, Aryl-, Alkylaryl- oder Alkylaryl-Gruppe stehen,
oder R⁵ und R⁵ zusammen einen gegebenenfalls substituierten, aliphatischen oder einen aromatischen Ring bilden;
mit der Massgabe, dass zumindest einer der Reste R², R³, R⁴ und R⁵ verschieden von H ist und dass, falls Reste R^{2'} und/oder R^{3'} vorhanden sind, zumindest drei der Reste R², R^{2'}, R³ und R^{3'} verschieden von H sind.
Aktivator gemäss Anspruch 1, **dadurch gekennzeichnet, dass** der Aktivator **C** die Formel (I-1) oder (I-2) aufweist 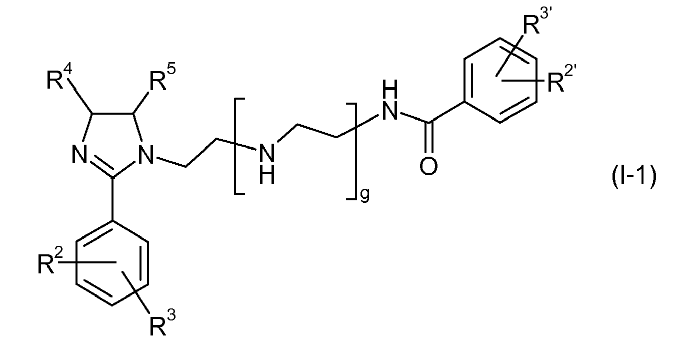 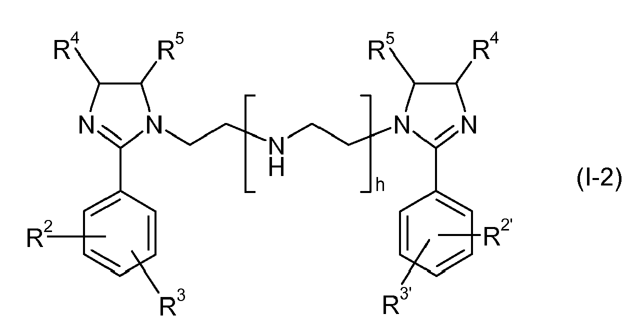 wobei g für 0 oder 1 oder 2 oder 3 steht und h für 0 oder 1 oder 2 steht.

**3.** Aktivator gemäss Anspruch 2, **dadurch gekennzeichnet, dass** R² und R^{2'} für OH steht und R³ und/oder R^{3'} für OH, Cl, CH₃ oder OCH₃, bevorzugt Cl, steht.

**4.** Aktivator gemäss Anspruch 1, **dadurch gekennzeichnet, dass** der Aktivator **C** ein Umsetzungsprodukt einer Verbindung der Formel (la) mit einem Isocyanat, insbesondere einem Monoisocyanat oder Diisocyanat, ist und mindestens ein Strukturelement der Formel (Ia-1) aufweist

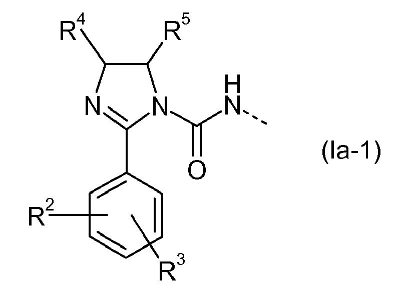

**5.** Aktivator gemäss Anspruch 4, **dadurch gekennzeichnet, dass** das Monoisocyanat oder Diisocyanat ausgewählt ist aus der Gruppe bestehend aus Phenylisocyanat, Tolylisocyanat, Hexamethylendiisocyanat (HDI), Isophorondiisocyanat (IPDI), Methylendiphenyldiisocyanat (MDI) und Toluoldiisocyanat (TDI).

**6.** Aktivator gemäss Anspruch 1, **dadurch gekennzeichnet, dass** der Aktivator **C** ein Umsetzungsprodukt einer Verbindung der Formel (la) mit einem Epoxid, insbesondere einem Monoglycidylether oder Diglycidylether oder Triglycidylether, ist und mindestens ein Strukturelement der Formel (la-2), insbesondere der Formel (la-2'), aufweist

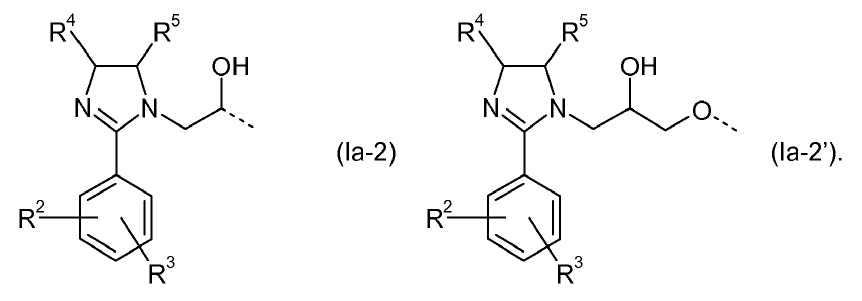

**7.** Aktivator gemäss einem der vorhergehenden Ansprüche, **dadurch gekennzeichnet, dass** der Aktivator **C** keine primären oder sekundären Amino-Gruppen aufweist.

**8.** Hitzehärtende Epoxidharzzusammensetzung umfassend
a) mindestens ein Epoxidharz **A** mit durchschnittlich mehr als einer Epoxidgruppe pro Molekül;
b) mindestens einen Härter **B** für Epoxidharze, welcher durch erhöhte Temperatur aktiviert wird und
c) mindestens einen Aktivator **C** gemäss einem der Ansprüche 1 bis 7.

**9.** Hitzehärtende Epoxidharzzusammensetzung gemäss Anspruch 8, **dadurch gekennzeichnet, dass** die Epoxidharzzusammensetzung zusätzlich mindestens einen Zähigkeitsverbesserer **D** enthält.

**10.** Hitzehärtende Epoxidharzzusammensetzung gemäss Anspruch 9, **dadurch gekennzeichnet, dass** der Zähigkeitsverbesserer **D** ausgewählt ist aus der Gruppe bestehend aus blockierten Polyurethanpolymeren, Flüssigkautschuken, Epoxidharz-modifizierten Flüssigkautschuken und Core-Shell-Polymeren.

**11.** Hitzehärtende Epoxidharzzusammensetzung gemäss Anspruch 10, **dadurch gekennzeichnet, dass** der Zähigkeitsverbesserer **D** ein Flüssigkautschuk ist, welcher ein Acrylonitil/Butadien-Copolymer ist, welches mit Carboxylgruppen oder (Meth)acrylatgruppen oder Epoxidgruppen terminiert ist, oder ein Derivat davon ist.

**12.** Hitzehärtende Epoxidharzzusammensetzung gemäss Anspruch 9 oder 10, **dadurch gekennzeichnet, dass** der Zähigkeitsverbesserer **D** ein blockiertes Polyurethanpolymer der Formel (IV) ist 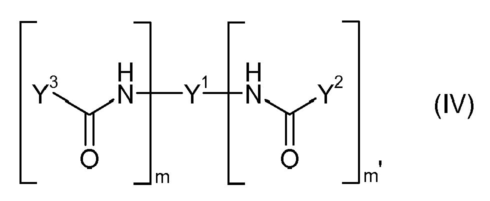 wobei
Y¹ für ein mit m+m' Isocyanatgruppen terminiertes lineares oder verzweigtes Polyurethanpolymer **PU1** nach dem Entfernen aller endständigen Isocyanatgruppen steht;
Y² unabhängig von einander für eine Blockierungsgruppe, welche sich bei einer Temperatur über 100°C abspaltet, steht;
Y³ unabhängig von einander für eine Gruppe der Formel (IV') steht 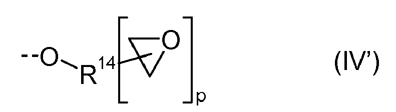 wobei R¹⁴ für einen Rest eines eine primäre oder sekundäre
Hydroxylgruppe enthaltenden aliphatischen, cycloaliphatischen, aromatischen oder araliphatischen Epoxids nach dem Entfernen
der Hydroxid- und Epoxidgruppen, steht;
p = 1, 2 oder 3 und
m und m' je für Werte zwischen 0 und 8 stehen, mit der Massgabe, dass m +m' für einen Wert von 2 bis 8 steht.

**13.** Hitzehärtende Epoxidharzzusammensetzung gemäss Anspruch 12, **dadurch gekennzeichnet, dass** Y² für einen Rest steht, welcher ausgewählt ist aus der Gruppe bestehend aus 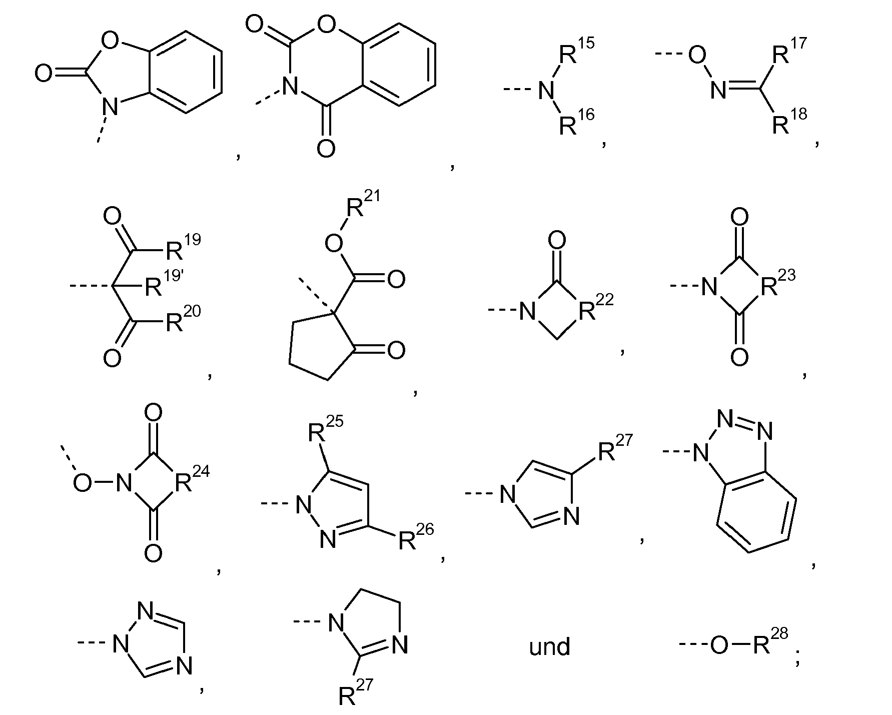 wobei
R¹⁵, R¹⁶, R¹⁷ und R¹⁸ je unabhängig voneinander für eine Alkyl- oder
Cycloalkyl- oder Aryl- oder Aralkyl- oder Arylalkyl-Gruppe steht
oder R¹⁵ zusammen mit R¹⁶, oder R¹⁷ zusammen mit R¹⁸, einen Teil
eines 4- bis 7- gliedrigen Rings bilden, welcher allenfalls substituiert ist;
R¹⁹, R^{19'} und R²⁰ je unabhängig voneinander für eine Alkyl- oder Aralkyl-
oder Aryl- oder Arylalkyl-Gruppe oder für eine Alkyloxy- oder Aryloxy-
oder Aralkyloxy-Gruppe steht;
R²¹ für eine Alkylgruppe steht,
R²², R²³ und R²⁴ je unabhängig voneinander für eine Alkylengruppe mit
2 bis 5 C-Atomen, welche gegebenenfalls Doppelbindungen aufweist oder substituiert ist, oder für eine Phenylengruppe oder für eine hydrierte Phenylengruppe stehen;
R²⁵, R²⁶ und R²⁷ je unabhängig voneinander für H oder für eine Alkyl-
gruppe oder für eine Arylgruppe oder eine Aralkylgruppe stehen; und
R²⁸ für eine Aralkylgruppe oder für eine ein- oder mehrkernige
substituierte oder unsubstituierte Aromatengruppe steht, welche
gegebenenfalls aromatische Hydroxylgruppen aufweist.

**14.** Hitzehärtende Epoxidharzzusammensetzung gemäss Anspruch 12 oder 13, **dadurch gekennzeichnet, dass** m verschieden von 0 ist.

**15.** Verfahren zur Verklebung von hitzestabilen Substraten umfassend die Schritte
i) Applizieren einer hitzehärtenden Epoxidharzzusammensetzung gemäss einem der Ansprüche 8 bis 14 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220 °C, insbesondere von 140 - 200°C, bevorzugt zwischen 160 und 190°C;
wobei das Substrat **S2** aus dem gleichen oder einem unterschiedlichen Material wie das Substrat **S1** besteht.

**16.** Verwendung einer einkomponentigen hitzehärtenden Epoxidharzzusammensetzung gemäss einem der Ansprüche 8 bis 14 als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

**17.** Verklebter Artikel, insbesondere ein Fahrzeug oder ein Teil eines Fahrzeuges, welches durch ein Verfahren gemäss Anspruch 15 erhalten wurde.
